(19) Europäisches Patentamt
European Patent Office
Office européen des brevets

(11) **EP 3 898 383 B1**

(12) **EUROPÄISCHE PATENTSCHRIFT**

(45) Veröffentlichungstag und Bekanntmachung des Hinweises auf die Patenterteilung:
**12.11.2025   Patentblatt 2025/46**

(21) Anmeldenummer: **19835635.4**

(22) Anmeldetag: **17.12.2019**

(51) Internationale Patentklassifikation (IPC):
***B62D 6/00*** *(2006.01)*

(52) Gemeinsame Patentklassifikation (CPC):
**B62D 6/008**

(86) Internationale Anmeldenummer:
**PCT/EP2019/085648**

(87) Internationale Veröffentlichungsnummer:
**WO 2020/127265 (25.06.2020 Gazette 2020/26)**

(54) **VERFAHREN ZUR BESTIMMUNG EINES LENKGEFÜHLS EINES STEER-BY-WIRE-LENKSYSTEMS**

METHOD FOR DETERMINING A STEERING SENSATION OF A STEER-BY-WIRE STEERING SYSTEM

PROCÉDÉ DE DÉTERMINATION D'UNE SENSATION DE DIRECTION D'UN SYSTÈME DE DIRECTION À COMMANDE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2018   DE 102018132865**

(43) Veröffentlichungstag der Anmeldung:
**27.10.2021   Patentblatt 2021/43**

(73) Patentinhaber:
• **thyssenkrupp Presta AG
9492 Eschen (LI)**
• **thyssenkrupp AG
45143 Essen (DE)**

(72) Erfinder:
• **LAPIS, Leonard
9466 Sennwald (CH)**
• **ROHRMOSER, Manuel
6712 Thüringen (AT)**

(74) Vertreter: **thyssenkrupp Intellectual Property GmbH
ThyssenKrupp Allee 1
45143 Essen (DE)**

(56) Entgegenhaltungen:
EP-A1- 2 647 548          EP-A2- 1 683 706
DE-A1- 102015 216 040     DE-A1- 102016 005 013
DE-A1- 102017 105 370

**Beschreibung**

Die vorliegende Erfindung betrifft ein Verfahren zur Steuerung eines Steer-by-Wire-Lenksystems mit den Merkmalen des Oberbegriffs des Anspruchs 1, sowie ein Steer-by-Wire-Lenksystem mit den Merkmalen des Oberbegriffs des Anspruchs 9.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist, vorgesehen. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt ein dadurch vorgebbares Lenkgefühl. Um bei Steer-by-Wire-Lenkungen die Rückwirkungen der Straße auf das Lenkrad zu simulieren, ist es notwendig, am Lenkrad oder der Lenksäule einen Feedback-Aktuator (FBA) vorzusehen, welcher in Abhängigkeit von den gewünschten Rückwirkungen der Lenkhandhabe ein Lenkgefühl aufprägt.

Herkömmlicherweise werden die Rückmeldungseigenschaften der Lenkung durch die Zahnstangenkraft bestimmt, die von den Spurstangen, welche über das Fahrwerk an die Räder angebunden sind, auf die Zahnstange wirkt. Die Zahnstangenkraft wird maßgeblich von den aktuellen Seitenführungskräften beeinflusst. Damit entspricht ein wesentlicher Teil der aktuellen Zahnstangenkraft einer Querbeschleunigung. Die Zahnstangenkraft wird aber nicht nur durch die während des Durchfahrens einer Kurve auftretenden Seitenkräfte bestimmt, sondern es hat eine Vielzahl von weiteren Größen einer aktuellen Fahrsituation einen Einfluss auf die Zahnstangenkraft. Ein Beispiel hierfür ist die Fahrbahnbeschaffenheit (Unebenheiten, Spurrillen, Reibwert).

Es ist bei elektrischen Servolenkungen (EPS) bekannt, die aktuell anliegende Zahnstangenkraft mittels eines an der Zahnstange angeordneten Momentensensors oder durch Schätzung mittels eines auf einem Modell des Lenksystems beruhenden sogenannten Beobachters zu ermitteln. Die Offenlegungsschrift DE 10 2015 216 040 A1 offenbart eine elektromechanische Servolenkung, bei der eine Zahnstangenkraft ermittelt wird, deren zeitlicher Verlauf untersucht und mit einem Referenzwert verglichen wird, um anschließend dem Fahrer eine haptische Rückmeldung bspw. in Form eines auf ein Lenkrad aufgeprägten Lenkmoments zu geben. Auch aus der DE 10 2017 105 370 A1 ist bekannt, eine Zahnstangenkraft zu schätzen und ein Feedback-Signal in Abhängigkeit der geschätzten Zahnstangenkraft zu erzeugen. EP 2 647 548 offenbart den Oberbegriff des Anspruchs 1 (deshalb auch des Anspruchs 9).

Es ist Aufgabe der vorliegenden Erfindung, ein Verfahren zur Steuerung eines Steer-by-Wire-Lenksystems für Kraftfahrzeuge anzugeben, das ein verbessertes Lenkgefühl ermöglicht und gleichzeitig ein störungsarmes Verhalten im Mittenbereich ausbildet. Weiter soll ein Steer-by-Wire-Lenksystem angegeben werden, dass ein verbessertes Lenkverhalten ermöglicht.

Diese Aufgabe wird von einem Verfahren zur Steuerung eines Steer-by-Wire-Lenksystems für Kraftfahrzeuge mit den Merkmalen des Anspruchs 1 und einem Steer-by-Wire-Lenksystems für Kraftfahrzeuge mit den Merkmalen des Anspruchs 9 gelöst. In den Unteransprüchen sind vorteilhafte Weiterbildungen der Erfindung genannt.

Demnach umfasst ein Verfahren zur Steuerung eines Steer-by-Wire-Lenksystems für ein Kraftfahrzeug:

- einen auf die gelenkten Räder wirkenden elektronisch regelbaren Lenksteller,

- eine Ansteuereinheit,

- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,

- eine Signalübertragung, die den Fahrerwunsch an die Ansteuereinheit übermittelt,

- wobei die Ansteuereinheit den Lenksteller ansteuert, um den Fahrerwunsch in eine Auslenkung der gelenkten Räder zu transformieren, wobei das Verfahren folgende Verfahrensschritte aufweist:

- Bestimmen des Radschlupfs wenigstens eines Vorderrads,

- Frequenzanalyse des zeitlichen Verlaufs des Radschlupfsignals des wenigstens einen Vorderrades,

- Bestimmen des Feedback-Signals in Abhängigkeit des Ergebnisses der Frequenzanalyse.

Bevorzugt kann das Feedback-Signal über folgende Schritte bestimmt werden:

- Generieren eines Übertragungsmodells aus einem Fahrzeuggeschwindigkeitsvektor und aus jeweils einem Vektor einer Vorderradgeschwindigkeit eines linken und eines rechten Vorderrads

- Ausgeben eines Lenkmoments an den Feedback-Aktuator, welches die Rückmeldungen der Strasse an den Fahrer auf das Lenkrad aufprägt.

Durch das Bestimmen des Feedback-Signals aus den Geschwindigkeitsvektoren kann dem Fahrer ein stabiles Signal über den Straßenzustand übermittelt werden, welches unabhängig von Kräften ist, welche aus den mechanischen Komponenten des Lenkstellers resultieren und an den Fahrer in Form eines Drehmoments übermittelt werden und welche wiederrum über die Ansteuereinheit an der Lenkstange des Lenkstellers zu einer unerwünschten Auslenkung führen.

Vorzugsweise werden bei der Frequenzanalyse dominante Frequenzen bestimmt, die mittels vordefinierter Frequenzwerte klassifiziert werden. Die dominanten Frequenzen werden bevorzugt in einem Frequenzbereich von 2 bis 50 Hz bestimmt, weiter bevorzugt werden die dominanten Frequenzen in einem Frequenzbereich von 8 bis 20 Hz bestimmt.

Bevorzugt wird in Abhängigkeit der Klassifizierung den dominanten Frequenzen ein vordefiniertes Feedback-Signal zugewiesen.

Das Feedback-Signal umfasst bevorzugt ein Lenkmoment und eine Mittenstellung.

Weiterhin ist es bevorzugt, dass der Radschlupf wenigstens eines Vorderrades $S_{,wF}$ gemäß folgender Gleichung bestimmt wird:

$$S_{,wF} = \frac{(v_{,wF} - v_{,veh})}{v_{,veh}}$$ , wobei $v_{,wF}$ die Vorderradgeschwindigkeit wenigstens eines Vorderrades und $v_{,veh}$ Fahrzeuggeschwindigkeit ist.

Bevorzugt wird der Radschlupf beider Vorderräder analysiert.

Weiterhin ist ein Steer-by-Wire-Lenksystem für ein Kraftfahrzeug vorgesehen, umfassend:

- einen auf die gelenkten Räder wirkenden elektronisch regelbaren Lenksteller, eine Ansteuereinheit, einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,

- eine Einrichtung zur Signalübertragung, die den Fahrerwunsch an die Ansteuereinheit übermittelt,

- wobei die Ansteuereinheit den Lenksteller ansteuert, um den Fahrerwunsch in eine Auslenkung der gelenkten Räder zu transformieren, wobei das Steer-by-Wire-Lenksystem dazu eingerichtet ist, ein zuvor beschriebenes auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:

Fig. 1:    eine schematische Darstellung eines Steer-by-Wire-Lenksystems,

Fig. 2:    ein Blockdiagramm einer Steuerung des Steer-by-Wire-Lenksystems mit einem Modul zur Bestimmung eines Lenkmomentes,

Fig. 3:    ein Blockdiagramm des Moduls zur Bestimmung des Lenkmomentes, sowie

Fig. 4:    ein Blockdiagramm eines weiteren Moduls zur Bestimmung des Lenkmomentes.

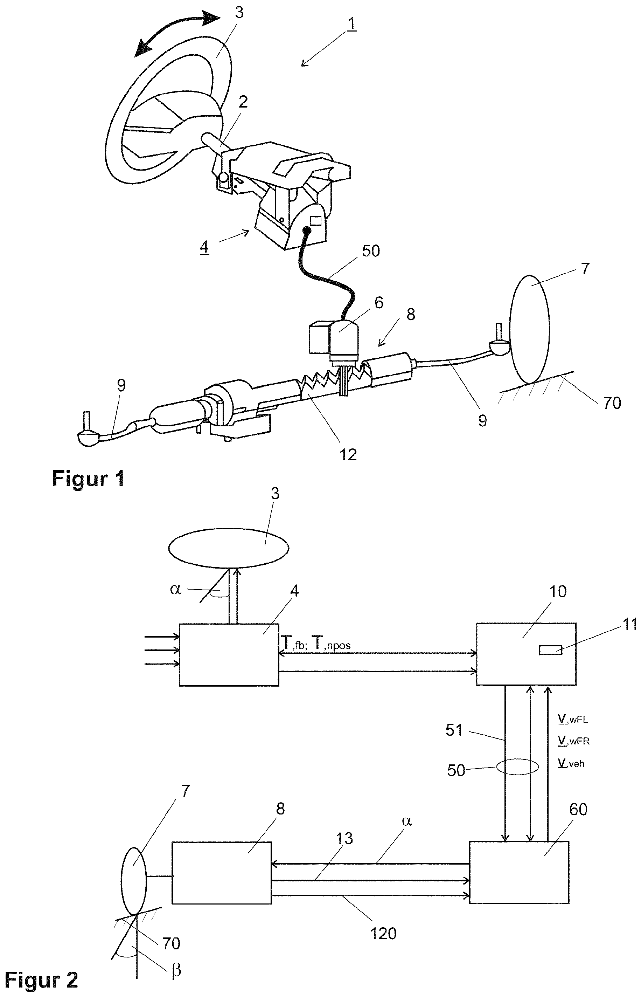

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Als Lenkeingabemittel kann ein Joy-Stick dienen. Des Weiteren ist an der Lenkwelle 2 ein Feedback-Aktuator 4 angebracht, welcher dazu dient, die Rückwirkungen von der Fahrbahn 70 auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel $\alpha$ der Lenkwelle 2 über Signalleitungen an eine Feedback-Aktuator-Monitoreinheit 10 übertragen, wie dies in der Figur 2 veranschaulicht ist. Die Feedback-Aktuator-Monitoreinheit 10 überträgt den Fahrerlenkwunsch an die Ansteuereinheit 60. Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen einen elektrischen Lenksteller 6 an, welcher die Stellung der gelenkten Räder 7 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7.

Figur 2 zeigt eine Steuerung des Feedback-Aktuators 4. Der Feedback-Aktuator 4 empfängt Signale über die Signalleitung 50 unter anderem von dem Drehwinkelsensor, der den Drehwinkel $\alpha$, die Lenkwinkelbeschleunigung und die Lenkwinkelgeschwindigkeit misst und speichert. Der Feedback-Aktuator 4 kommuniziert mit der Feedback-Aktuator-Monitoreinheit 10, die den Feedback-Aktuator 4 steuert. Die Feedback-Aktuator-Monitoreinheit 10 empfängt von einer Ansteuereinheit 60 des Lenkstellers 6 den Ist-Radlenkwinkel β der gelenkten Räder 7, sowie weitere Größen, die die Ansteuereinheit 60 ermittelt hat. Die an einer Zahnstange 12 gemessene Zahnstangenposition 120 und weitere Fahrbahninformationen 13 werden an die Ansteuereinheit 60 weiter gegeben. Die Ansteuerungseinheit 60 empfängt weiterhin fahrerseitige Lenkbefehle 51, wie den Lenkwinkelstatus. Die Feedback-Aktuator-Monitoreinheit 10 weist ein Modul zur Bestimmung eines Lenkgefühls 11 auf. Das Modul erzeugt ein Signal, das den Feedback-Aktuator 4 ansteuert und in einem Lenkmoment $T_{,fb}$ resultiert, das ein Lenkgefühl erzeugt. Zudem wird ein Lenkmoment für die Geradeausposition des Lenkrads $T_{,npos}$ an den Feedback-Aktuator 4 übermittelt.

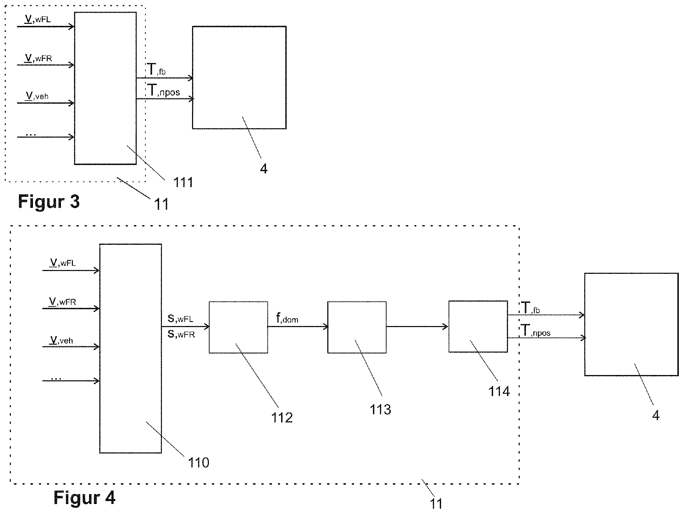

In Figur 3 ist ein Modul zur Bestimmung des Lenkgefühls 11 dargestellt. In einem ersten Schritt 111 werden aus den Vektoren der Straßenradgeschwindigkeiten der beiden Vorderräder $\underline{v}_{,wFL}, \underline{v}_{,wFR}$, sowie der Fahrzeuggeschwindigkeit $\underline{v}_{,veh}$ mittels einer Frequenzanalyse oder über ein Übertragungsmodell, beispielsweise einem Bandpassfilter, das Lenkmoment für die Geradeausposition des Lenkrads $T_{,npos}$ bestimmt, und auf das resultierende Lenkmoment $T_{,fb}$ aufgeprägt und an den Feedback-Aktuator 4 übermittelt. Durch das Verwenden der Straßenradgeschwindigkeiten und der Fahrzeuggeschwindigkeit kann ein stabiles Lenkmoment an den Fahrer zurückgegeben werden, welches unabhängig von auf das Lenkgetriebe wirkenden Kräften ist, welche aus den mechanischen Komponenten des Lenkstellers resultieren und an den Fahrer in Form eines Drehmoments übermittelt werden und welche wiederrum über die Ansteuereinheit an der Lenkstange des Lenkstellers zu einer unerwünschten Auslenkung führen.

In Figur 4 ist ein weiteres Modul zur Bestimmung des Lenkgefühls 11 dargestellt. In einem ersten Schritt 110 werden aus den Vektoren der Straßenradgeschwindigkeiten der beiden Vorderräder $\underline{v}_{,wFL}, \underline{v}_{,wFR}$, sowie der Fahrzeuggeschwindigkeit $\underline{v}_{,veh}$ der Radschlupf der beiden vorderen Räder $s_{,wFL}, s_{,wFR}$ mittels folgender Zusammenhänge ermittelt:

$$s_{,wFL} = \frac{(v_{,wFL} - v_{,veh})}{v_{,veh}} \ , \quad s_{,wFR} = \frac{(v_{,wFR} - v_{,veh})}{v_{,veh}} \ .$$

Anhand des Radschlupfs der beiden vorderen Räder $s_{,wFL}, s_{,wFR}$ lässt sich ermitteln, ob das Fahrzeug auf einer ebenen/trockenen Straße oder beispielsweise auf nasser Fahrbahn oder einem Kiesweg fährt. Fährt das Fahrzeug beispielsweise auf einem Kiesweg oszilliert der Radschlupf der beiden vorderen Räder $s_{,wFL}, s_{,wFR}$, sodass diese Unregelmäßigkeiten durch Analyse der Werte ermittelt werden können. Es wird daher in einem nächsten Schritt 112 eine Frequenzanalyse des Radschlupfs der beiden vorderen Räder $s_{,wFL}, s_{,wFR}$ durchgeführt. Bevorzugt wird bei der Frequenzanalyse eine Schwingung des zeitlichen Radschlupfverlaufs im Bereich von etwa 2 bis 50 Hz, insbesondere im Bereich von etwa 8 bis 20 Hz, analysiert und daraus Häufigkeiten bzw. dominante Frequenzen ermittelt. Die ermittelten dominanten Frequenzen $f_{,dom}$ werden in einem nächsten Schritt 113 mit vordefinierten Frequenzwerten verglichen. Dabei werden die ermittelten dominanten Frequenzen $f_{,dom}$ bestimmten Frequenzbereichen ursachenbezogen zugeordnet und als wünschenswert zu beurteilende Frequenzbereiche weitergeleitet bzw. als störend empfundene Frequenzbereiche in einem Rückmeldepfad unterdrückt oder zumindest stark abgeschwächt. Anhand der weitergeleiteten dominanten Frequenzen wird in einem nächsten Schritt 114 ein Wert für das Lenkmoment $T_{,fb}$ erzeugt, um dem Fahrer ein möglichst realistisches Lenkgefühl bezogen auf die Fahrbahninformationen zu geben. Weiterhin wird ein Lenkmoment für die Geradeausposition des Lenkrads $T_{,npos}$ an den Feedback-Aktuator 4 übermittelt. Die so ermittelten Lenkmomente sind störungsarm, da sie nur von der Messung der Geschwindigkeiten abhängen und somit vollkommen unabhängig von der Zahnstangenkraft sind.

**Patentansprüche**

1. Verfahren zur Steuerung eines Steer-by-Wire-Lenksystems für ein Kraftfahrzeug umfassend:

   - einen auf die gelenkten Räder (7) wirkenden elektronisch regelbaren Lenksteller (6),
   - eine Ansteuereinheit (60),
   - einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
   - eine Signalübertragung, die den Fahrerwunsch an die Ansteuereinheit (60) übermittelt,
   - wobei die Ansteuereinheit (60) den Lenksteller (6) ansteuert, um den Fahrerwunsch in eine Auslenkung der gelenkten Räder (7) zu transformieren,
   - **dadurch gekennzeichnet, dass** das Verfahren folgende Verfahrensschritte aufweist:

      - Bestimmen des Radschlupfs wenigstens eines Vorderrads,
      - Frequenzanalyse des zeitlichen Verlaufs des Radschlupfsignals des wenigstens einen Vorderrades,
      - Bestimmen des Feedback-Signals in Abhängigkeit des Ergebnisses der Frequenzanalyse.

2. Verfahren nach Anspruch 1, **dadurch gekennzeichnet, dass** bei der Frequenzanalyse dominante Frequenzen bestimmt werden, die mittels vordefinierter Frequenzwerte klassifiziert werden.

3. Verfahren nach Anspruch 2, **dadurch gekennzeichnet, dass** in Abhängigkeit der Klassifizierung den dominanten Frequenzen ein vordefiniertes Feedback-Signal zugewiesen wird.

4. Verfahren nach einem der vorhergehenden Ansprüche, **dadurch gekennzeichnet, dass** das Feedback-Signal ein Lenkmoment und eine Mittenstellung umfasst.

5. Verfahren nach einem der vorhergehenden Ansprüche, **dadurch gekennzeichnet, dass** der Radschlupf wenigstens eines Vorderrades ($s_{,wF}$) gemäß folgender Gleichung bestimmt wird:

$$S_{,wF} = \frac{(V_{,wF} - V_{,veh})}{V_{,veh}}$$, wobei $v_{,wF}$ die Vorderradgeschwindigkeit wenigstens eines Vorderrades und $v_{,veh}$ Fahrzeuggeschwindigkeit ist.

6. Verfahren nach einem der vorhergehenden Ansprüche, **dadurch gekennzeichnet, dass** die dominanten Frequenzen in einem Frequenzbereich von 2 bis 50 Hz bestimmt werden.

7. Verfahren nach Anspruch 6, **dadurch gekennzeichnet, dass** die dominanten Frequenzen in einem Frequenzbereich von 8 bis 20 Hz bestimmt werden.

8. Verfahren nach einem der vorhergehenden Ansprüche, **dadurch gekennzeichnet, dass** der Radschlupf beider Vorderräder analysiert wird.

9. Steer-by-Wire-Lenksystem (1) für ein Kraftfahrzeug umfassend:

   - einen auf die gelenkten Räder (7) wirkenden elektronisch regelbaren Lenksteller (6),
   - eine Ansteuereinheit (60),
   - einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
   - eine Einrichtung zur Signalübertragung, die den Fahrerwunsch an die Ansteuereinheit (60) übermittelt,
   - wobei die Ansteuereinheit (60) den Lenksteller (6) ansteuert, um den Fahrerwunsch in eine Auslenkung der gelenkten Räder (7) zu transformieren, **dadurch gekennzeichnet, dass**

das Steer-by-Wire-Lenksystem (1) dazu eingerichtet ist, ein Verfahren nach einem der Ansprüche 1 bis 8 auszuführen.

**Claims**

1. A method for controlling a steer-by-wire steering system for a motor vehicle comprising:

   - an electronically controllable steering actuator (6) which acts on the steered wheels (7),
   - a control unit (60),
   - a feedback actuator (4) to which a driver's request for a steering angle can be applied by a driver via a steering input means (3) and which outputs a feedback signal to the steering input means as a reaction to the driver's request and a driving condition of the motor vehicle,
   - a signal transmission which transmits the driver's request to the control unit (60),
   - wherein the control unit (60) controls the steering actuator (6) in order to convert the driver's request into a deflection of the steered wheels (7),
   - **characterized in that** the method comprises the following method steps:

   - determination of the wheel slip of at least one front wheel,
   - frequency analysis of the profile over time of the wheel slip signal of the at least one front wheel,
   - determination of the feedback signal in dependence on the result of the frequency analysis.

2. The method as claimed in claim 1, **characterized in that** in the frequency analysis there are determined dominant frequencies which are classified by means of predefined frequency values.

3. The method as claimed in claim 2, **characterized in that** a predefined feedback signal is allocated to the dominant frequencies in dependence on the classification.

4. The method as claimed in one of the preceding claims, **characterized in that** the feedback signal comprises a steering torque and a center position.

5. The method as claimed in one of the preceding claims, **characterized in that** the wheel slip of at least one front wheel ($s_{,wF}$) is determined in accordance with the following equation:

$$S_{,wF} = \frac{(v_{,wF} - v_{,veh})}{v_{,veh}}$$, wherein $v_{,WF}$ is the front wheel velocity of at least one front wheel and $v_{,veh}$ is the vehicle velocity.

6. The method as claimed in one of the preceding claims, **characterized in that** the dominant frequencies are determined in a frequency range of from 2 to 50 Hz.

7. The method as claimed in claim 6, **characterized in that** the dominant frequencies are determined in a frequency range of from 8 to 20 Hz.

8. The method as claimed in one of the preceding claims, **characterized in that** the wheel slip of both front wheels is analyzed.

9. A steer-by-wire steering system (1) for a motor vehicle comprising:

   - an electronically controllable steering actuator (6) which acts on the steered wheels (7),
   - a control unit (60),
   - a feedback actuator (4) to which a driver's request for a steering angle can be applied by a driver via a steering input means (3) and which outputs a feedback signal to the steering input means as a reaction to the driver's request and a driving condition of the motor vehicle,
   - a device for signal transmission which transmits the driver's request to the control unit (60),
   - wherein the control unit (60) controls the steering actuator (6) in order to convert the driver's request into a deflection of the steered wheels (7), **characterized in that**

   the steer-by-wire steering system (1) is adapted to carry out a method as claimed in one of claims 1 to 8.

## Revendications

1. Procédé de commande d'un système de direction à commande électrique pour un véhicule à moteur, comprenant :

   - un actionneur de direction à commande électronique (6) qui agit sur les roues directrices (7),
   - une unité de commande (60),
   - un actionneur de rétroaction (4) auquel une demande d'angle de braquage peut être appliquée par un conducteur via un moyen d'entrée de direction (3) et qui émet un signal de rétroaction vers le moyen d'entrée de direction en réaction à la demande du conducteur et à une condition de conduite du véhicule à moteur,
   - une transmission de signal qui transmet la demande du conducteur à l'unité de commande (60),

   - dans lequel l'unité de commande (60) commande l'actionneur de direction (6) afin de convertir la demande du conducteur en une déviation des roues directrices (7),
   - **caractérisé en ce que** le procédé comprend les étapes suivantes :

      - détermination du patinage d'au moins une roue avant,
      - analyse fréquentielle du profil dans le temps du signal de patinage de la roue au moins une roue avant,
      - détermination du signal de rétroaction en fonction du résultat de l'analyse fréquentielle.

2. Procédé selon la revendication 1, **caractérisé en ce que,** dans l'analyse fréquentielle, on détermine des fréquences dominantes qui sont classées à l'aide de valeurs de fréquence prédéfinies.

3. Procédé selon la revendication 2, **caractérisé en ce qu'**un signal de rétroaction prédéfini est attribué aux fréquences dominantes en fonction du classement.

4. Procédé selon l'une des revendications précédentes, **caractérisé en ce que** le signal de rétroaction comprend un couple de direction et une position centrale.

5. Procédé selon l'une des revendications précédentes, **caractérisé en ce que** le patinage d'au moins une roue avant ($s_{,WF}$) est déterminé selon l'équation suivante :

$$S_{,wF} = \frac{(v_{,wF} - v_{,veh})}{v_{,veh}}$$ , où $v_{,wF}$ est la vitesse de la roue avant d'au moins une roue avant et $v_{,veh}$ est la vitesse du véhicule.

6. Procédé selon l'une des revendications précédentes, **caractérisé en ce que** les fréquences dominantes sont déterminées dans une plage de fréquences comprise entre 2 et 50 Hz.

7. Procédé selon la revendication 6, **caractérisé en ce que** les fréquences dominantes sont déterminées dans une plage de fréquences comprise entre 8 et 20 Hz.

8. Procédé selon l'une des revendications précédentes, **caractérisé en ce que** le patinage des deux roues avant est analysé.

9. Système de direction à commande électrique (1) pour un véhicule à moteur, comprenant :

   - un actionneur de direction à commande électronique (6) qui agit sur les roues directrices (7),
- une unité de commande (60),
- un actionneur de rétroaction (4) auquel une demande d'angle de braquage peut être appliquée par un conducteur via un moyen d'entrée de direction (3) et qui émet un signal de rétroaction vers le moyen d'entrée de direction en réaction à la demande du conducteur et à une condition de conduite du véhicule à moteur,
- un dispositif de transmission de signaux qui transmet la demande du conducteur à l'unité de commande (60),
- dans lequel l'unité de commande (60) commande l'actionneur de direction (6) afin de convertir la demande du conducteur en une déviation des roues directrices (7), **caractérisé en ce que**

le système de direction à commande électrique (1) est adapté pour mettre en oeuvre un procédé selon l'une des revendications 1 à 8.

**Figur 1**

**Figur 2**

$\underline{V}$,wFL

$\underline{V}$,wFR

$\underline{V}$,veh

...

T,fb

T,npos

111

11

4

**Figur 3**

$\underline{V}$,wFL

$\underline{V}$,wFR

$\underline{V}$,veh

...

S,wFL
S,wFR

f,dom

T,fb

T,npos

110

112

113

114

4

11

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015216040 A1
- DE 102017105370 A1

- EP 2647548 A